# FASCICULE DE BREVET EUROPEEN

(11) **EP 2 593 328 B1**
(45) Date de publication et mention de la délivrance du brevet: **05.10.2016**
(21) Numéro de dépôt: 11743312.8
(22) Date de dépôt: 07.07.2011
(51) Int. Cl.: B60N 2/005, B60N 2/42, B60N 2/68, B60R 5/00, B60R 7/04

(54) **DISPOSITIF DE SECURITE POUR ARRETER DES CHARGES SOUS SIEGE**
SICHERHEITSEINRICHTUNG ZUM FANGEN VON LOSEN GEGENSTÄDEN UNTER DEM SITZ
SAFETY DEVICE FOR STOPPING LOOSE OBJECTS UNDER THE SEAT

(30) Priorité: 13.07.2010 FR 1055699
(43) Date de publication de la demande: 22.05.2013
(73) Titulaire: Peugeot Citroën Automobiles SA, 78140 Vélizy-Villacoublay (FR)
(72) Inventeur: REBEL, Vincent, 75010 Paris (FR)
(86) Numéro de dépôt international: PCT/FR2011/051621
(87) Numéro de publication internationale: WO 2012/007678

(56) Documents cités:
- FR-A1- 2 755 656
- FR-A1- 2 886 594
- US-A1- 2001 050 499
- US-A1- 2009 115 229

## Description

La présente invention concerne un dispositif de sécurité pour arrêter des charges sous siège dans un véhicule. Plus particulièrement, l'invention concerne les sièges ou banquettes, de tout type de véhicule automobile, dont l'assise est posée sur des pieds par opposition aux sièges dont l'assise est directement fixée sur la structure.

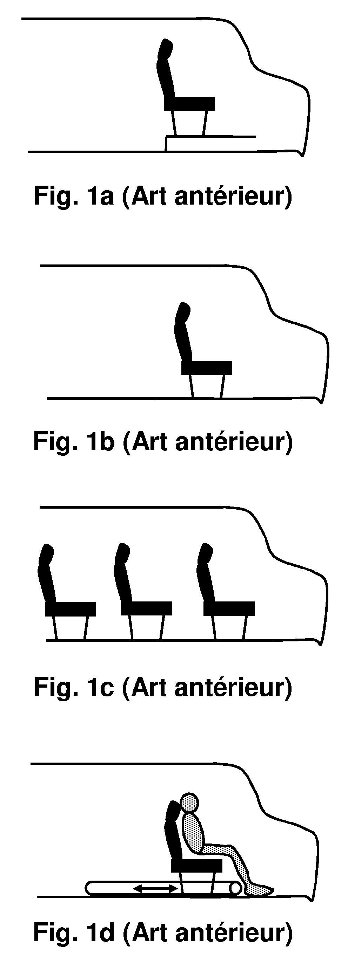

Cette invention s'applique plus particulièrement encore aux véhicules automobiles de type véhicules utilitaires (figures 1a et 1b), monospaces ou encore combi, véhicules issus de véhicule utilitaires et équipés de plusieurs rangées de siège pour permettre le transport de personnes, (figure 1 c). La figure 1a représente un véhicule utilitaire comprenant des sièges avant surélevés par rapport au plancher de charge du véhicule. La figure 1 b représente un utilitaire comprenant des sièges avant dans le prolongement du plancher de charge. La figure 1c représente un véhicule de type monospace ou combi, dont les différentes rangées de siège / banquette sont montées sur pieds.

Quelque soit le type de véhicule considéré, il est courant de placer des charges sous l'assise des sièges, comme par exemple des bagages, des outils, des tuyaux... Il est apparu dans le cadre de la présente invention que la protection des pieds et des jambes des passagers assis sur de tels sièges n'était pas assurée vis-à-vis de chocs éventuels de ces charges en cas de coup de frein brutal ou d'accident, comme cela est représenté à la figure 1 d. Il en résulte un risque de blessure des passagers par choc des charges sur leurs pieds ou jambes.

On connait également des documents US 2001050499 A1 et US 2009115229 A1 des dispositifs de rangement et/ou d'arrêt de charge disposés sous des sièges conformes au préambule de la revendication 1. Toutefois ces dispositifs sont soit encombrants et/ou difficilement escamotables ou amovibles et difficilement compatibles avec tout type de siège

A cet effet, selon un premier aspect, l'invention concerne un siège pour véhicule comprenant une assise montée sur pieds, caractérisé en ce qu'il comprend un dispositif de sécurité conforme à la partie caractérisante de la revendication 1. De cette manière, en cas de coup de frein brutal ou de choc frontal, les charges placées sous le siège sont retenue par le dispositif de sécurité. Une telle solution répond à l'attente en matière de sécurité en particulier pour les véhicules utilitaires, tout en fournissant une solution simple et économique, compatible avec tous les types existants de siège.

Le dispositif de sécurité s'étend entre les pieds de l'assise à l'avant de l'assise, et ne s'étend pas entre les pieds de l'assise à l'arrière de l'assise, de manière à ce que des charges disposées en partie derrière le siège puissent s'étendre en partie sous l'assise du siège, par exemple des charges longues type tubes ou planches ; il peut s'étendre entre les pieds de l'assise sur les côtés de l'assise. Avantageusement, le dispositif de sécurité s'étend sur toute la hauteur entre l'assise de siège et le plancher de véhicule.

Selon un mode de réalisation avantageux, le dispositif de sécurité s'étend sur toute la longueur entre les pieds avant du siège. De cette manière, non seulement l'espace de rangement est optimisé tout en étant assurant une sécurité complète même en cas de transport de charge allongée, tels que des tubes ou de planches.

Le dispositif de sécurité est formé d'une plaque pleine reliant les pieds avant du siège. Par exemple, la plaque pourra être en métal, en matériau de synthèse ou tout autre matériau permettant de réaliser une plaque pleine, (voire en grillage d'un pas adapté au type de charges transportées). De cette manière, la plaque présente une résistance accrue permettant de supporter efficacement un choc dû à une charge sous siège.

La plaque présente à chaque extrémité des côtés extérieurs, une portion repliée formant retour, fixée à l'arrière du pied avant correspondant. De cette manière, les organes de fixation de la plaque s'appuient sur la partie arrière des pieds avant de façon à ce que les efforts liés à la poussée des charges se transmettent sur toute la hauteur des pieds, sans risque d'arrachement desdits organes de fixation de la plaque sur les pieds. Avantageusement, chaque portion repliée formant retour entoure le pied correspondant et vient se refermer sur la plaque, assurant ainsi une fixation très robuste de la plaque sur les pieds du siège.

Selon un autre mode de réalisation avantageux, le dispositif de sécurité comprend des moyens de jonction avec le plancher du véhicule. Ces moyens de jonction assurent la liaison entre la plaque de retenue et le plancher du véhicule de sorte à empêcher le passage d'une charge plate, comme par exemple une planche sous le dispositif de sécurité. Avantageusement, les moyens de jonction sont réalisés par élasticité d'une pliure longitudinale dans la partie inférieure de la plaque. De cette manière, aucune matière additionnelle n'est nécessaire, la jonction étant réalisée uniquement par pliure de la plaque. Alternativement, les moyens de jonction peuvent être réalisés au moyen d'un joint à lèvre en caoutchouc.

Selon un autre mode de réalisation, le dispositif de sécurité est équipé d'un espace frontal de rangement. L'espace de rangement pourra être réalisé au moyen d'un filet ou d'un bac de rangement adjoint sur la surface frontale de la plaque.

Selon un deuxième aspect, l'invention concerne un véhicule automobile comprenant au moins un siège ou une banquette selon le premier aspect. L'invention s'applique plus particulièrement à des véhicules automobiles de type utilitaires, monospaces ou combinés.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
- les figures 1a à 1d, déjà décrites, représentent des véhicules selon l'art antérieur ;
- la figure 2 représente un véhicule muni d'un dispositif de sécurité selon un mode de réalisation de la présente invention ;
- la figure 3 représente un siège équipé d'un dispositif de sécurité selon un mode de réalisation de la présente invention ;
- la figure 4 représente une plaque pleine munie de moyens de fixation à ses extrémités ;
- la figure 5 représente une plaque munie de moyens de jonction avec le plancher du véhicule.

Bien que la présente description ne fasse mention que de siège de véhicule, il faut bien entendu comprendre tout moyen d'assise d'un véhicule, à savoir des sièges individuels, des banquettes, des sièges fixes, des sièges réglables (en longueur, en hauteur, ...), des sièges modulaires (ex : avec coussin d'assise mobile, par exemple en rotation vers le haut le long du dossier, et avec pieds repliables), etc.

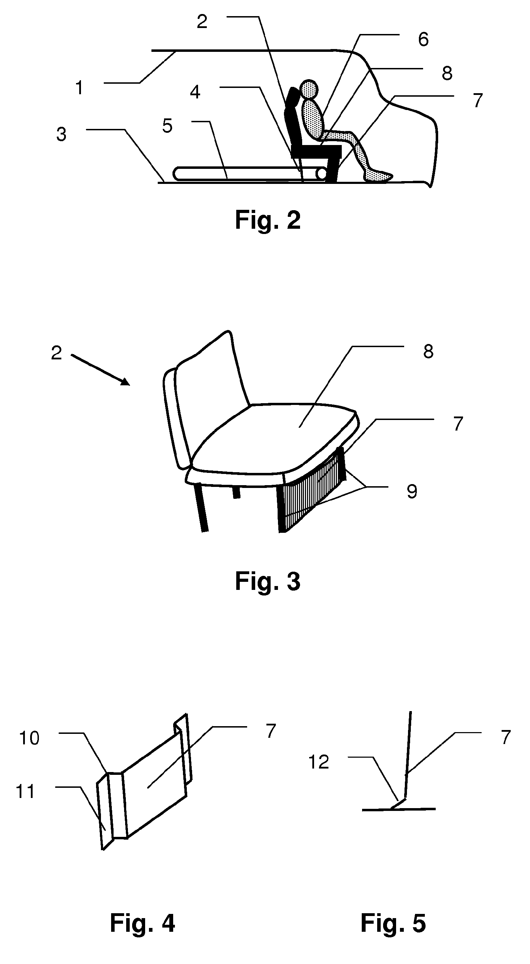

La figure 2 représente un véhicule 1 muni d'un siège 2 monté sur le plancher 3 du véhicule par l'intermédiaire de pieds 4. Comme cela est représenté, il est possible de stocker une charge 5 sur le plancher du véhicule, la charge 5 venant se placer au moins en partie sous le siège 2.

Pour éviter en cas de choc frontal ou de freinage brutal que la charge 5 ne vienne heurter les pieds ou les jambes du passager 6 assis sur le siège, il est prévu de munir le siège 2 d'un dispositif de sécurité 7 sous l'assise 8 entre les deux pieds avant.

La figure 3 représente un siège 2 équipé d'un dispositif de sécurité 7 placé sous l'assise 8 entre les deux pieds avant 9. Ce dispositif de sécurité est sous forme d'une plaque fixée à l'avant des pieds du siège entre le coussin d'assise et le plancher de façon à bloquer le déplacement d'éventuelles charges placées sous ce siège et ainsi éviter de blesser les pieds et ou jambes de l'occupant en cas de freinage ou d'accident. La plaque 7 est fixée positivement sur les pieds avant.

La figure 4 représente une plaque pleine munie d'organes de fixation à ses extrémités. Comme cela est visible, la plaque 7 comprend à chacune des extrémités latérales, une portion repliée 10 formant retour, i.e. une double pliure permettant de former un coude, la pliure extrêmale 11 de la portion repliée 10 étant sensiblement parallèle à la plaque. De cette manière, la plaque peut être fixée en s'appuyant sur l'arrière des pieds de façon à ce que les efforts liés à la poussée des charges se transmettent sur toute la hauteur des pieds, sans risque d'arrachement des organes de fixation de la plaque sur les pieds. La plaque 7 peut être en métal, en matériau de synthèse, ou tout autre matériau (bois, ...) permettant de réaliser une plaque pleine. Alternativement, il est également possible de prévoir une portion repliée pouvant ingérer complètement les pieds dans le retour de plaque, par renfermement des 2 retours latéraux sur le corps principal de la plaque.

La figure 5 représente une plaque munie de moyens de jonction 12 avec le plancher du véhicule. Les moyens de jonction sont réalisés par l'intermédiaire d'une pliure de la partie inférieure de la plaque qui assure ainsi une jonction parfaite avec le plancher pour éviter à des charges minces de pouvoir passer entre la plaque et le plancher. Cette pliure est avantageusement obtenu par un effet ressort lié à l'élasticité de la matière de la plaque. Alternativement, les moyens de jonction peuvent être réalisés avec un joint type lèvre en caoutchouc naturel ou tout autre matériau synthétique similaire, soit encore avec une forme dans le plancher et/ou son revêtement.

On comprendra que diverses modifications et/ou améliorations évidentes pour l'homme du métier peuvent être apportées aux différents modes de réalisation de l'invention décrits dans la présente description dans le cadre de l'invention défini par les revendications annexées. En particulier, une variante consiste à intégrer une fonction de rangement au niveau du dispositif de sécurité sous la forme d'un filet fixé sur l'avant de la plaque ou encore par l'adjonction de pièces rapportées sur l'avant de la plaque définissant un bac de rangement.

## Revendications

1. Siège (2) pour véhicule comprenant une assise (8) montée sur pieds (4, 9) et comprenant un dispositif de sécurité (7) assurant un arrêt de charge sous l'assise entre deux pieds (9) latéralement opposés, formé d'une plaque (7) pleine reliant les pieds avant (9) du siège, **caractérisé en ce qu'**à chaque extrémité, la plaque présente une portion repliée (10) formant retour, fixée à l'arrière du pied avant (9) correspondant.

2. Siège (2) selon la revendication 1, **caractérisé en ce que** le dispositif de sécurité (7) s'étend sur toute la longueur entre les pieds avant (9) du siège.

3. Siège (2) selon l'une des revendications 1 ou 2, **caractérisé en ce que** chaque portion repliée (10) formant retour entoure le pied correspondant et vient se refermer sur la plaque (7).

4. Siège (2) selon l'une des revendications 1 à 3, **caractérisé en ce que** le dispositif de sécurité (7) comprend des moyens de jonction (12) avec le plancher (3) du véhicule.

5. Siège (2) selon la revendication 4, **caractérisé en ce que** les moyens de jonction (12) sont réalisés par élasticité d'une pliure longitudinale dans la partie inférieure de la plaque.

6. Siège (2) selon la revendication 4, **caractérisé en ce que** les moyens de jonction (12) sont réalisés au moyen d'un joint à lèvre en caoutchouc.

7. Siège (2) selon l'une des revendications précédentes, **caractérisé en ce que** le dispositif de sécurité (7) est équipé d'un espace frontal de rangement.

8. Véhicule automobile (1) comprenant au moins un siège (2) selon l'une des revendications précédentes.

## Patentansprüche

1. Sitz (2) für ein Fahrzeug, umfassend eine Sitzfläche (8), die auf Füßen (4, 9) montiert ist, und umfassend eine Sicherheitsvorrichtung (7), die eine Spannung unter der Sitzfläche zwischen zwei seitlich gegenüberliegenden Füßen (9) gewährleistet, die von einer vollen Platte (7) gebildet ist, die die Vorderfüße (9) des Sitzes verbindet, **dadurch gekennzeichnet, dass** die Platte an jedem Ende einen gefalzten Abschnitt (10), der einen Umschlag bildet, aufweist, der hinten am entsprechenden Vorderfuß (9) befestigt ist.

2. Sitz (2) nach Anspruch 1, **dadurch gekennzeichnet, dass** sich die Sicherheitsvorrichtung (7) über die gesamte Länge zwischen den Vorderfüßen (9) des Sitzes erstreckt.

3. Sitz (2) nach einem der Ansprüche 1 oder 2, **dadurch gekennzeichnet, dass** jeder gefalzte Abschnitt (10), der einen Umschlag bildet, den entsprechenden Fuß umgibt und sich auf der Platte (7) wieder schließt.

4. Sitz (2) nach einem der Ansprüche 1 bis 3, **dadurch gekennzeichnet, dass** die Sicherheitsvorrichtung (7) Verbindungsmittel (12) mit dem Boden (3) des Fahrzeugs umfasst.

5. Sitz (2) nach Anspruch 4, **dadurch gekennzeichnet, dass** die Verbindungsmittel (12) durch Elastizität eines Längsfalzes in dem unteren Teil der Platte verwirklicht sind.

6. Sitz (2) nach Anspruch 4, **dadurch gekennzeichnet, dass** die Verbindungsmittel (12) mit Hilfe einer Kautschuklippendichtung verwirklicht sind.

7. Sitz (2) nach einem der vorhergehenden Ansprüche, **dadurch gekennzeichnet, dass** die Sicherheitsvorrichtung (7) mit einem vorderen Stauraum ausgestattet ist.

8. Kraftfahrzeug (1), umfassend mindestens einen Sitz (2) nach einem der vorhergehenden Ansprüche.

## Claims

1. A vehicle seat (2) including a seat portion (8) mounted on legs (4, 9) and including a safety device (7) enabling a load under the seat portion, between two laterally opposite legs (9), to be restrained, formed by a solid plate (7) connecting the front legs (9) of the seat, **characterized in that** at each end the plate has a folded portion (10) forming a return, fixed to the rear of the corresponding front leg (9).

2. The seat (2) according to claim 1, **characterized in that** the safety device (7) extends over the entire length between the front legs (9) of the seat.

3. The seat (2) according to one of claims 1 or 2, **characterized in that** each folded portion (10) forming a return surrounds the corresponding leg and comes to close on the plate (7).

4. The seat (2) according to one of claims 1 to 3, **characterized in that** the safety device (7) includes connection means (12) with the floor (3) of the vehicle.

5. The seat (2) according to claim 4, **characterized in that** the connection means (12) are realized by elasticity of a longitudinal fold in the lower part of the plate.

6. The seat (2) according to claim 4, **characterized in that** the connection means (12) are realized by means of a rubber lip seal.

7. The seat (2) according to one of the preceding claims, **characterized in that** the safety device (7) is equipped with a front storage space.

8. A motor vehicle (1) including at least one seat (2) according to one of the preceding claims.
